(19) Europäisches Patentamt / European Patent Office / Office européen des brevets

(11) **EP 3 173 598 A1**

(12) **DEMANDE DE BREVET EUROPEEN**

(43) Date de publication:
**31.05.2017 Bulletin 2017/22**

(21) Numéro de dépôt: **16201414.6**

(22) Date de dépôt: **30.11.2016**

(51) Int Cl.:
**F02B 37/00** (2006.01)    **F01N 5/04** (2006.01)
**F02M 26/06** (2016.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **30.11.2015 FR 1561541**

(71) Demandeur: **Valeo Systemes de Controle Moteur 95800 Cergy Saint Christophe (FR)**

(72) Inventeurs:
• ANGELOT, Pierre-Julian
  **78500 SARTROUVILLE (FR)**
• COPPIN, Thomas
  **95000 CERGY (FR)**

(74) Mandataire: **Garcia, Christine
Propriété Intellectuelle
Valeo Systèmes de Contrôle Moteur
14, avenue des Béguines
95800 Cergy St Christophe (FR)**

(54) **SYSTÈME MOTEUR AVEC CIRCUIT DE RECIRCULATION DES GAZ BRULÉS**

(57)    La présente invention concerne un système moteur (10) à circuit (21) de recirculation basse pression des gaz brulés, comportant un moteur thermique équipé d'un circuit (18) d'échappement disposé en sortie du moteur thermique (17), un turbocompresseur comportant une turbine de turbocompresseur (19) disposée sur le circuit d'échappement (18), dans lequel C de récupération d'énergie recevant les gaz d'échappement à basse pression en aval du turbocompresseur, la turbine (30) de récupération d'énergie étant couplée à la turbine (19) du turbocompresseur.

**Fig. 1**

**Description**

La présente invention concerne les machines thermiques et plus particulièrement les moteurs à combustion interne à circuit de recirculation des gaz brûlés et turbocompresseur.

De nombreux moteurs à allumage par compression ou commandé équipant les véhicules automobiles sont équipés de turbocompresseurs pour augmenter la pression des gaz admis. Ces turbocompresseurs comportent un compresseur d'air entraîné par une turbine animée par la pression des gaz d'échappement.

L'invention s'intéresse plus particulièrement aux systèmes moteurs à recirculation des gaz d'échappement à basse pression, dans lesquels une fraction des gaz d'échappement prélevée en aval de la turbine du turbocompresseur est mélangée aux gaz admis, après traversée d'une vanne de recirculation des gaz d'échappement RGE ou vanne EGR (pour exhaust gaz recirculation selon la terminologie anglaise) EGR créant une chute de pression, les gaz non recirculés étant évacués via une vanne de contre pression à l'échappement ou vanne CPE. Une telle recirculation permet notamment de réduire la teneur en oxydes d'azote (NOx) des gaz d'échappement des moteurs.

Un des inconvénients d'une telle architecture provient du fait qu'afin d'assurer un débit de gaz recirculé suffisant, la vanne CPE doit être partiellement fermée, ce qui augmente la pression en amont de cette vanne et donc au niveau du collecteur d'échappement.

La présente invention a donc pour objet de pallier un ou plusieurs des inconvénients des dispositifs de l'art antérieur en proposant un ensemble moteur permettant de réduire la pression à l'échappement et ainsi la consommation de carburant.

Pour cela la présente invention propose un système moteur à circuit de recirculation basse pression des gaz brûlés, comportant un moteur thermique équipé d'un circuit d'échappement disposé en sortie du moteur thermique, un turbocompresseur comportant une turbine de turbocompresseur disposée sur le circuit d'échappement, dans lequel le circuit de recirculation est associé à un système de récupération d'énergie recevant les gaz d'échappement à basse pression en aval du turbocompresseur, le système de récupération d'énergie étant couplée à la turbine du turbocompresseur.

La turbine de récupération d'énergie permet de récupérer l'enthalpie normalement perdue dans le circuit de recirculation.

Selon un mode de réalisation de l'invention, le système de récupération d'énergie est une turbine.

Selon un mode de réalisation de l'invention, la turbine du turbocompresseur et le système de récupération d'énergie sont couplés en rotation.

Selon un mode de réalisation de l'invention, le couplage entre la turbine du turbocompresseur et le système de récupération d'énergie est réalisé par une liaison rigide.

Selon un mode de réalisation de l'invention, le système comporte un système de découplage du système de récupération d'énergie.

Selon un mode de réalisation de l'invention, le système de découplage est un embrayage.

Selon un mode de réalisation de l'invention, le système de découplage est une roue libre.

Selon un mode de réalisation de l'invention, le système comportant une vanne en aval de la turbine.

Selon un mode de réalisation de l'invention, le moteur thermique étant un moteur à allumage par compression ou commandé.

L'invention concerne également, un véhicule, notamment automobile, équipé d'un système moteur tel que défini selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:

- la figure 1 représente une architecture moteur avec un système de récupération d'énergie selon un premier mode de réalisation de l'invention,
- la figure 2 est une représentation schématique du système de récupération d'énergie de l'invention,
- la figure 3 illustre le gain potentiel en consommation avec le système selon l'invention.

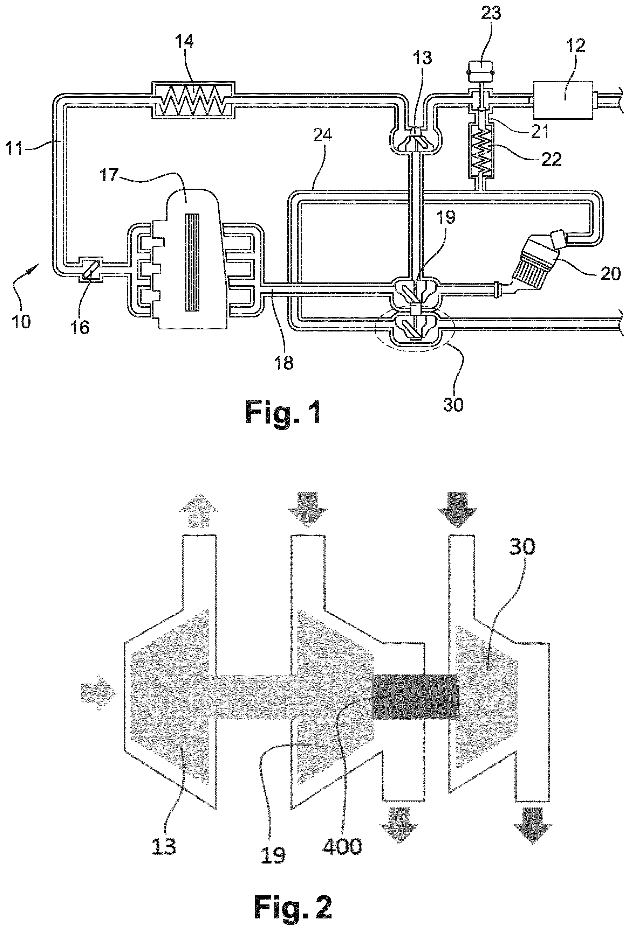

L'architecture représentée à la figure 1, encore appelée système moteur 10, comporte selon un mode de réalisation, un moteur thermique à combustion interne 17 à allumage par compression ou commandé, par exemple diesel ou essence ou autre, relié à un circuit 11 d'admission d'air dans le moteur, comportant un filtre à air 12 en entrée, un compresseur 13 de turbocompresseur pour comprimer l'air destiné au moteur et un refroidisseur 14 en aval du compresseur 13, pour refroidir l'air de suralimentation.

Selon un mode de réalisation de l'invention, un dispositif de réglage de débit 16, tel que par exemple une vanne papillon, permet de contrôler le débit d'air admis dans le moteur à combustion interne 17. Ce dernier est relié à un circuit d'échappement 18 qui comporte une turbine 19 de turbocompresseur, entraînée par les gaz d'échappement, accouplée au compresseur 13 de suralimentation pour l'entraîner en rotation.

Le circuit d'échappement 18 comporte également, en aval de la turbine 19, un dispositif 20 de traitement des gaz brûlés.

Un circuit 21 de recirculation des gaz brulés basse pression prenant sa source en aval de la turbine 19 et muni par exemple d'un refroidisseur 22 capte une partie des gaz brûlés pour les réinjecter avec un débit contrôlé dans le moteur 17, par l'intermédiaire d'une vanne 23 dite vanne de recirculation des gaz d'échappement RGE ou vanne EGR (pour exhaust gas recirculation selon la terminologie anglaise), disposée en amont du turbocompresseur, qui crée une perte de charge suffisante.

Dans le cadre de l'invention, le circuit 21 de recirculation est associé à un système 30 de récupération d'énergie couplé à la turbine 19 du turbocompresseur.

Selon un mode de réalisation de l'invention, ce système 30 de récupération d'énergie est une turbine 30 de récupération d'énergie, ou tout autre moyen équivalent.

Cette turbine 30 de récupération d'énergie est sur un circuit 24 de récupération d'énergie qui est formé en aval de la source du circuit 21 de recirculation des gaz de d'échappement. Le circuit 24 de récupération d'énergie permet aussi l'évacuation des gaz d'échappement.

Selon un autre mode de réalisation de l'invention, la turbine de récupération d'énergie et le circuit de récupération d'énergie forment le système de récupération d'énergie.

La turbine 30 de récupération d'énergie permet de récupérer l'enthalpie normalement perdue dans le circuit 21 de recirculation par la perte de charge dans la vanne CPE.

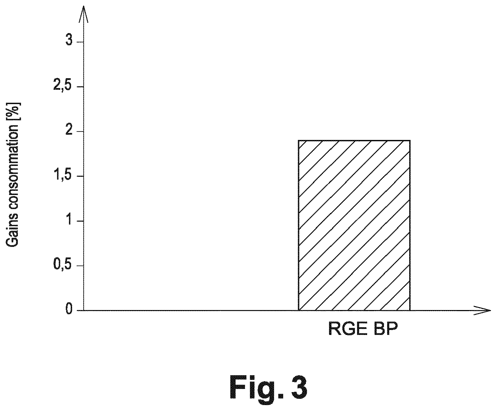

La puissance nécessaire à l'entraînement du compresseur restant pratiquement inchangée, de même que le débit et la température des gaz traversant la turbine du turbocompresseur, l'apport de puissance sur l'arbre du turbocompresseur permet de diminuer le rapport de détente au niveau de la turbine du turbocompresseur, donc la pression à l'échappement. Par conséquent, les pertes par pompage sont réduites et donc la consommation de carburant du moteur. Le gain apporté par le système de récupération d'énergie en consommation de carburant est illustré sur la figure 3 pour un véhicule diesel à vitesse stabilisée de 130km/h.

Le couplage entre la turbine 19 du turbocompresseur et la turbine 30 de récupération d'énergie est réalisé par une liaison rigide 400 illustrée figure 2.

Selon un mode de réalisation de l'invention, l'ensemble comporte un système permettant de découpler la turbine 30 de récupération d'énergie, par exemple, lors des phases de fonctionnement nécessitant un accroissement rapide de la vitesse de rotation du turbocompresseur, et par exemple une forte accélération.

Selon un mode de réalisation de l'invention, le système de découplage est un embrayage. Plus précisément, en fonctionnement normal avec récupération, l'embrayage est fermé, assurant la liaison entre les deux turbines, donc l'assistance du turbocompresseur. Par exemple, pour la montée en régime du turbocompresseur, l'embrayage est ouvert, afin de limiter l'inertie à accélérer. Cette solution offre une grande liberté en terme de pilotage du système.

Selon un autre mode de réalisation de l'invention, le système de découplage est une roue libre. Dans les phases de fonctionnement où la turbine de récupération présente un intérêt, celle-ci est entraînée par les gaz d'échappement et la roue libre se bloque, assurant l'assistance du turbocompresseur. Lors des phases de montée en vitesse du turbocompresseur, l'assistance se maintient automatiquement tant que la puissance récupérée au niveau de la turbine additionnelle tend à lui conférer une accélération supérieure à celle du turbocompresseur. Dans le cas contraire, la roue libre laisse la turbine de récupération tourner librement, ce qui évite que son inertie ne freine la montée en vitesse du turbocompresseur. Ce système s'autorégule et ne nécessite pas d'actionneur additionnel.

Ainsi, la solution proposée avec un système de découplage, assure non seulement que le temps de réponse de la boucle d'air n'est pas supérieur au cas de référence, mais peut même, dans certaines phases de fonctionnement, participer à sa réduction.

Le potentiel de récupération d'énergie d'un tel système selon l'invention peut s'écrire de la façon suivante :

$$W_r = \eta_r(Q_t - Q_{egr})T_{ur}cp_{ur}\left\{1 - \left(\frac{P_{ur}}{P_{dr}}\right)^{\frac{1-\gamma}{\gamma}}\right\}$$

La dynamique de montée en vitesse du turbocompresseur d'un tel système selon l'invention peut s'écrire de la façon suivante :

Dans le cas de l'architecture de référence, la dynamique de vitesse du turbocompresseur :

$$J_t \frac{d\omega_{t,0}}{dt} \times \omega_{t,0} = W_{t,0} - W_{c,0}$$

(1)

Avec le système de récupération, dans le cas d'une liaison rigide entre les deux turbines :

$$(J_t + J_r) \frac{d\omega_t}{dt} \times \omega_t = WP_r + W_{t,0} - WP_{c,0}$$

(2)

Si $J_r \frac{d\omega_{t,0}}{dt} \times \omega_{t,0} > WP_r$ (3), on s'expose à une augmentation du temps de montée en vitesse du turbocompresseur par rapport au cas de référence.

Dans le cas d'un couplage par embrayage ou par roue libre :

Si la condition (3) se trouve vérifiée les deux turbines sont désaccouplées et l'on retrouve la dynamique de référence donnée par l'équation (1).

Dans le cas contraire, les turbines sont accouplées. La turbine de récupération contribue à la relance du turbocompresseur.

Comme $J_r \frac{d\omega_{t,0}}{dt} \times \omega_{t,0} \le W_r$ , $\frac{d\omega_t}{dt} \ge \frac{d\omega_{t,0}}{dt}$ : la montée en vitesse du turbocompresseur est plus rapide.

Avec

| | |
|---|---|
| $cp$ : | capacité calorifique des gaz à pression constante |
| $J$ : | inertie |
| $Q$ : | débit massique |
| $P_u$ : | pression en amont de l'élément considéré |
| $P_d$ : | pression en aval de l'élément considéré |
| $W_c$ : | puissance mécanique du compresseur du turbocompresseur |
| $W_t$ : | puissance mécanique de la turbine du turbocompresseur |
| $W_r$ : | puissance mécanique de la turbine de la turbine de récupération |
| $\eta$ : | rendement isentropique |
| $\omega$ : | vitesse de rotation |
| $X_t$ : | turbine du turbocompresseur |
| $X_r$ : | turbine de récupération |
| $X_0$ : | configuration de référence |
| $t$ : | temps, |
| $Xegr$ : | circuit de recirculation |
| $\gamma$ : | indice adiabatique du gaz considéré |

L'invention s'applique à un moteur de véhicule terrestre, naval ou aérien, ainsi qu'aux moteurs de groupes électrogènes et à toutes autres applications utilisant un moteur thermique à turbocompresseur et recirculation basse pression des gaz brûlés.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

**Revendications**

1. Système moteur (10) à circuit (21) de recirculation basse pression des gaz brulés, comportant un moteur thermique équipé d'un circuit (18) d'échappement disposé en sortie du moteur thermique (17), un turbocompresseur comportant une turbine de turbocompresseur (19) disposée sur le circuit d'échappement (18), dans lequel le circuit (21) de recirculation est associé à un système(30) de récupération d'énergie recevant les gaz d'échappement à basse pression en aval du turbocompresseur, le système (30) de récupération d'énergie étant couplée à la turbine (19) du turbocompresseur.

2. Système moteur (10) selon la revendication 1, dans lequel le système de récupération d'énergie est une turbine (30).

3. Système moteur selon une des revendications 1 ou 2, dans lequel la turbine (19) du turbocompresseur et le système (30) de récupération d'énergie sont couplés en rotation.

4. Système moteur selon une des revendications 1 à 3, dans lequel le couplage entre la turbine (19) du turbocompresseur et le système (30) de récupération d'énergie est réalisé par une liaison rigide (400).

5. Système moteur selon une des revendications 1 à 3, comportant un système de découplage du système (30) de récupération d'énergie.

6. Système moteur selon la revendication 5, dans lequel le système de découplage est un embrayage.

7. Système moteur selon la revendication 5, dans lequel le système de découplage est une roue libre.

8. Système moteur selon une des revendications 1 à 7, comportant une vanne en aval de la turbine (30).

9. Système moteur selon l'une quelconque des revendications 1 à 8, le moteur thermique (17) étant un moteur à allumage par compression ou commandé.

10. Véhicule, notamment automobile, équipé d'un système moteur (10) tel que défini à l'une quelconque des revendications 1 à 9.

**Fig. 1**

**Fig. 2**

**Fig. 3**

Europäisches
Patentamt

European
Patent Office

Office européen
des brevets

**RAPPORT DE RECHERCHE EUROPEENNE**

Numéro de la demande

EP 16 20 1414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | US 2009/205326 A1 (WATSON DAVID EUGENE [US]) 20 août 2009 (2009-08-20)<br>* alinéas [0030] - [0032], [0053]; figures 1,4 * | 1-4,9,10<br>5-8 | INV.<br>F02B37/00<br>F01N5/04<br>F02M26/06 |
| Y | FR 3 005 996 A1 (PEUGEOT CITROEN AUTOMOBILES SA [FR]) 28 novembre 2014 (2014-11-28)<br>* alinéas [0014], [0018]; figure 4 * | 5-8 | |
| A | WO 2015/086935 A1 (RENAULT SA [FR]) 18 juin 2015 (2015-06-18)<br>* abrégé; figure 1 * | 1,2,9,10 | |
| A | DE 10 2011 108204 A1 (DAIMLER AG [DE]) 24 janvier 2013 (2013-01-24)<br>* abrégé; figure 1 * | 1,2,9,10 | |
| A | JP 2005 069092 A (NISSAN DIESEL MOTOR CO) 17 mars 2005 (2005-03-17)<br>* abrégé; figure 1 * | 1,2,9,10 | DOMAINES TECHNIQUES RECHERCHES (IPC) |
| A | EP 1 903 197 A2 (IVECO SPA [IT]) 26 mars 2008 (2008-03-26)<br>* abrégé; figure 1 * | 1,2,9,10 | F02B<br>F01N<br>F02M |
| X,P | WO 2015/197994 A1 (VALEO SYS CONTROLE MOTEUR SAS [FR]) 30 décembre 2015 (2015-12-30)<br>* page 4, lignes 1-3; figure 5 * | 1-4,9,10 | |
| A,P | WO 2015/197993 A1 (VALEO SYS CONTROLE MOTEUR SAS [FR]) 30 décembre 2015 (2015-12-30)<br>* page 3, lignes 30-32; figure 6 * | 1-4,9,10 | |

Le présent rapport a été établi pour toutes les revendications

| Lieu de la recherche | Date d'achèvement de la recherche | Examinateur |
|---|---|---|
| Munich | 7 février 2017 | Dorfstätter, Markus |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 3 173 598 A1**

**ANNEXE AU RAPPORT DE RECHERCHE EUROPEENNE
RELATIF A LA DEMANDE DE BREVET EUROPEEN NO.**

EP 16 20 1414

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2017

| Document brevet cité au rapport de recherche | Date de publication | Membre(s) de la famille de brevet(s) | Date de publication |
|---|---|---|---|
| US 2009205326 A1 | 20-08-2009 | AUCUN | |
| FR 3005996 A1 | 28-11-2014 | AUCUN | |
| WO 2015086935 A1 | 18-06-2015 | CN 105829673 A | 03-08-2016 |
| | | EP 3092382 A1 | 16-11-2016 |
| | | FR 3014947 A1 | 19-06-2015 |
| | | KR 20160097253 A | 17-08-2016 |
| | | WO 2015086935 A1 | 18-06-2015 |
| DE 102011108204 A1 | 24-01-2013 | AUCUN | |
| JP 2005069092 A | 17-03-2005 | AUCUN | |
| EP 1903197 A2 | 26-03-2008 | AUCUN | |
| WO 2015197994 A1 | 30-12-2015 | FR 3022947 A1 | 01-01-2016 |
| | | WO 2015197994 A1 | 30-12-2015 |
| WO 2015197993 A1 | 30-12-2015 | FR 3022946 A1 | 01-01-2016 |
| | | WO 2015197993 A1 | 30-12-2015 |

EPO FORM P0460

Pour tout renseignement concernant cette annexe : voir Journal Officiel de l'Office européen des brevets, No.12/82